Europäisches Patentamt

European Patent Office

Office européen des brevets

(19)

(11) **EP 1 462 977 A1**

(12) **EUROPEAN PATENT APPLICATION**

(43) Date of publication:
**29.09.2004 Bulletin 2004/40**

(51) Int Cl.⁷: **G06F 17/60**

(21) Application number: **04075940.9**

(22) Date of filing: **29.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **27.03.2003 US 400246**

(71) Applicant: **Combinenet, Inc.
Pittsburgh, Pennsylvania 15222 (US)**

(72) Inventors:
• **Suri, Subhash
  Santa Barbara, CA 93105 (US)**
• **Sandholm, Tuomas
  Pittsburgh, PA 15211 (US)**
• **Levine, David L.
  Chesterfield, MO 63017 (US)**

(74) Representative:
**Land, Addick Adrianus Gosling et al
Arnold & Siedsma
Sweelinckplein 1
2517 GK Den Haag (NL)**

(54) **Direct output method for targeting negotiation opportunities**

(57)    A method of determining a winning allocation in an exchange includes receiving a plurality of bids, with each bid placed on a quantity of at least one item. At least one allocation modifier is received and an objective is defined as a function of each bid and the allocation modifier. At least one limitation is defined on how the allocation modifier can be changed. From the objective subject to the at least one limitation, a determination is made on how the allocation modifier changes. In response to how the allocation modifier changes, outputting data from which a bidder of a bid associated with the allocation modifier can be identified.

EXCHANGE SPECIFICATION
AND RECEIVED BIDS

| BIDDER \ EXCHANGE ITEM(S)/QUANTITY | W/10,000 | X/60,000 | Y/50,000 | Z/50,000 | Y&Z/50,000 |
|---|---|---|---|---|---|
| 1 | $8.00 | $5.00 | $4.50 | $7.50 | |
| 2 | $8.70 | $4.95 | $4.48 | $7.47 | |
| 3 | $7.90 | $4.80 | $4.55 | $7.60 | |
| 4 | $7.80 | $5.30 | | | * $12.35 |

* COMBINATORIAL BID

FIG. 1

Printed by Jouve, 75001 PARIS (FR)

**Description**

BACKGROUND OF THE INVENTION

Field of the Invention

The present invention relates to an exchange and/or an auction or reverse auction (specialized cases of an exchange) and, more particularly, to identifying one or more bidders to approach for concessions in their bids whereupon the one or more bidder's participation in the winning allocation would be improved.

Description of Related Art

Marketplaces, such as auctions, reverse auctions, and exchanges, are often used to match potential bid takers and bidders. However, such matching is not necessarily final or complete. For example, it may be used to determine one or more competitive bidders in an exchange, but not bind them to their bid prices or other terms. Instead, the bid takers may then negotiate with each of the competitive bidders in order to determine the winning one(s) and their terms, including price.

Such post-market negotiation can be very resource intensive, in terms of human labor or face-to-face negotiations and computational resources for automated negotiations. Without direction on whom to negotiate with and how to initiate and conduct the bargaining, the negotiator cannot expect to get the best results, e.g., for price: lowest cost for a buyer, or highest revenue for a seller, and they would likely expend more resources, including time, than necessary, because they would attempt to negotiate with parties that are less likely than others to provide the best results.

Prior approaches to negotiation describe mechanisms and infrastructures, sometimes as part of larger systems. They do not offer specific guidance on how to target negotiations, i.e., suggestions on whom to negotiate with and/or what to negotiate for.

For example, United States Patent No. 6,064,981 to Barni et al., discloses a method for publishing cargo rate and discount information in an auction setting. The supported negotiation method drives the auction process by changing offered prices. The participants are anonymous, so it is not suitable for targeted negotiation based on capabilities, needs, desires, and/or any other specific participant properties.

United States Patent No. 6,055,519 to Kennedy et al. discloses a system and process for negotiation and tracking of sale of goods. The negotiation support is limited to storage of negotiation state and monitoring of progress, but no support is provided for guiding the negotiation.

United States Patent Application Publication No. 2002/0046157 to Solomon discloses intelligent negotiation agents (INAs) that perform various functions of product, service and bundle acquisition. However, the INA approach does not address how its agents should identify and prioritize negotiation opportunities, which is necessary given the likelihood of limited negotiation resources.

It is, therefore, desirable to identify effective negotiation targets. More specifically, it is desirable to provide a systematic and/or automated method for targeting negotiation opportunities that would help improve the efficiency of buyer-seller based markets.

SUMMARY OF THE INVENTION

The invention is a method of determining a winning allocation in an exchange. The method includes specifying for the exchange at least one of item. A bid is received from each of a plurality of bidders, with at least one bid placed on a quantity of the one item. A first allocation is determined that include an award of the quantity of the one item to a first bid. A constraint or allocation modifier is specified to be utilized in connection with the received bids. A second allocation is determined that includes an award of the quantity of the one item to a second bid as a function of the allocation modifier. The first or second allocation is designated as the winning allocation as a function of the award of the quantity of the one item in the second bid.

The first and second bids can be the same bids. The first allocation or the second allocation can be designated as the winning allocation as a function of a difference in the number of bidders receiving an award in the first and second allocations.

Each bidder receiving an award in the second allocation that is different than said bidder's award in the first allocation can be designated as a potential winning bidder. Each potential winning bidder can be notified that acceptance of the allocation modifier will cause them to be included in the second allocation. Each potential winning bidder's acceptance or rejection of the allocation modifier can be received. In response to at least one potential winning bidder rejecting the allocation modifier, the first allocation is designated as a winning allocation for the exchange. In response to each potential winning bidder accepting the allocation modifier, the second allocation is designated as the winning allocation for the exchange.

The allocation modifier can include a change in at least one of a volume discount, a volume discount threshold, a number of winning bidders, an allocation value, a delivery date, a credit term, a property of an item and a non-price bid property such as credit history, delivery history or bidder reputation.

The method can further include determining an aggregate administration cost associated with administering the additional winning bidders in the second allocation when the allocation modifier includes the change in the allocation value and the second allocation has more winning bidders than the number of winning bidders of the first allocation. The aggregate price of the bids of at least one winning bid can be offset as a function of the administration cost and the second allocation can be designated as the winning allocation for the exchange.

The step of offsetting the aggregate price of the bids can include determining a pro rata administration cost for each potential winning bidder by dividing the aggregate administration cost by (1) the total number of potential winning bidders or (2) the total number of winning bidders in the second allocation. The aggregate price of the bids of (1) each potential winning bidder or (2) each winning bidder can then be offset by the pro rata administration cost.

Prior to determining the first allocation, a bid modifier that is utilized in connection with the bids received from the one bidder can be received from at least one of the plurality of bidders. The first allocation can be determined as a function of each received bid modifier. The second allocation can be determined as a function of the combination of each received bid modifier and the allocation modifier.

The method can also include soliciting at least one potential winning bidder to accept the allocation modifier. In response to the at least one potential winning bidder accepting the allocation modifier, at least part of the bid of the at least one potential winning bidder can be included in the winning allocation for the exchange.

The invention is also a computer readable medium having stored thereon instructions which, when executed by a processor, cause the processor to perform the steps of: (a) receive an exchange specification that includes at least one item; (b) receive at least one bid from each of a plurality of bidders, with each bid comprised of a quantity of at least one item and at least one of (1) a per item price associated with each item of the bid, (2) a price for the associated quantity of each item of the bid and (3) an aggregate price for all of the items of the bid; (c) determine a first allocation from the bids received from the plurality of bidders; (d) receive an allocation modifier that imposes a condition on the allocation determination; (e) determine a second allocation from the bids received from the plurality of bidders as a function of the allocation modifier; and (f) designate the first or second allocation as the winning allocation as a function of at least one difference between the first and second allocations.

The step of designating the first or second allocation as the winning allocation can be made as a function of a difference in the number of bidders receiving an award in the first and second allocations.

Each bidder receiving an award in the second allocation that is different than said bidder's award in the first allocation can be identified as a potential winning bidder, where each award includes a quantity of at least one item. At least one potential winning bidder can be notified that acceptance of the allocation modifier will cause them to be included in the second allocation. The instructions can also cause the processor to receive each potential winning bidder's acceptance or rejection of the allocation modifier; designate the first allocation as a winning allocation for the exchange when at least one potential winning bidder rejects the allocation modifier and designate the second allocation as the winning allocation for the exchange when each potential winning bidder accepts the allocation modifier.

The instructions can also cause the processor to perform the steps of: (g) determine if the second allocation has more bidders than the number of bidders of the first allocation when the allocation modifier includes the change in the allocation value; (h) determine an aggregate administration cost associated with administering each additional bidder in the second allocation; (i) offset the aggregate price of at least one bid in the second allocation as a function of the administration cost; and (j) designate the second allocation as the winning allocation for the exchange.

The invention is also an exchange winner determination method that includes determining an exchange specification that includes a plurality of items. At least one bid can be received from each of a plurality of bidders, with each bid including a quantity of at least one item and a price associated with (i) each item of the bid, (ii) the associated quantity of each item of the bid or (iii) all of the items of the bid. The received bids can be processed to determine a first allocation that includes at least some of the items and their associated quantities. An allocation modifier can be input that imposes a condition on the processing of one or more of the received bids. The received bids can be processed as a function of the allocation modifier to determine a second allocation of at least some of the items and their associated quantities. The first or second allocation can be designated as a winning allocation as a function of at least one difference between the first and second allocations.

Each bidder receiving an award in the second allocation that is different than said bidder's award in the first allocation can be designated as a potential winning bidder. Each award includes a quantity of at least one item. Each potential winning bidder can be notified that acceptance of the allocation modifier by all potential winning bidders will cause them to be included in a winning allocation for the exchange. A determination can be made if each potential winning bidder accepts or rejects the allocation modifier. The first allocation can be designated as the winning allocation when at least one potential winning bidder rejects the allocation modifier. The second allocation can be designated as the winning allocation when each potential winning bidder accepts the allocation modifier.

The invention is also a method of determining a winning allocation in an exchange. The method includes receiving a plurality of bids, with each bid placed on a quantity of at least one item. At least one allocation modifier is received and an objective is defined as a function of each bid and the allocation modifier. At least one limitation is defined on how the allocation modifier can be changed. From the objective subject to the at least one limitation, a determination is made how the allocation modifier changes. In response to how the allocation modifier changes, outputting data from which a bidder of a bid associated with the allocation modifier can be identified.

The output data can include the bidders identity or the allocation modifier itself. The change in the allocation modifier can include a change in a value of a variable thereof.

The allocation modifier expresses a modification to be imposed on the bid when a limitation associated with the bid is satisfied. The change of the allocation modifier is indicative of whether the condition associated with the bid is satisfied. The data is output when one or more values of the allocation modifier indicate the condition is satisfied.

The method can also include soliciting the identified bidder to accept the allocation modifier in response to how the allocation modifier changes.

Moreover, the method can include receiving the identified bidders acceptance or rejection of the allocation modifier. In response to the identified bidder accepting the allocation modifier, a first allocation is output wherein the quantity of each item is allocated to a first set of bidders that includes the identified bidder. In response to the identified bidder rejecting the allocation modifier, repeating the foregoing steps with a different allocation modifier or no allocation modifier and outputting a second allocation wherein the quantity of each item is allocated to a second set of bidders.

The first and second set of bidders can be the same. The second set of bidders can also include the identified bidder.

The method can further include displaying one of the bidder, the first allocation, and/or the second allocation.

The objective can include a variable and a coefficient for each bid and a variable and a coefficient for each allocation modifier. The limitation can be an equality or an inequality.

The change in the allocation modifier can correspond to a change in a volume discount, a volume discount threshold, a number of bidders to receive an award in an allocation, an allocation value, a delivery date, a credit term, an item property and/or a non-price bid property. The non-price bid property can include at least one of a credit history, a delivery history, and/or the a bidder's reputation.

The invention is also a computer readable medium having stored thereon instructions which, when executed by a processor, cause the processor to perform the steps of: (a) receive a plurality of bids, with each bid placed on a quantity of at least one item; (b) receive at least one allocation modifier; (c) form an objective as a function of each bid and the allocation modifier; (d) receive at least one limitation on how the allocation modifier can be changed; (e) determine from the objective subject to the at least one limitation how the allocation modifier changes; and (f) in response to how the allocation modifier changes, output data from which a bidder of a bid associated with the allocation modifier can be identified.

The allocation modifier can express a modification to be imposed on the bid when a condition associated with the bid is satisfied. The change of the allocation modifier is indicative of whether the condition associated with the bid is satisfied. The data is output when the change of the allocation modifier indicates the condition is satisfied.

The instructions can further cause the processor to determine when the change of the allocation modifier indicates the condition is satisfied and, in response to determining the condition is satisfied, output an allocation wherein the quantity of each item is allocated to a set of bids that includes the bid of the identified bidder.

The instructions can further cause the processor to notify the identified bidder that acceptance by said bidder of the allocation modifier will cause said bidder to be included in a winning allocation.

The instructions can also cause the processor to receive the bidders acceptance or rejection of the allocation modifier. In response to the bidder accepting the allocation modifier, a first allocation can be output wherein the quantity of each item is allocated to a first set of bidders that includes the bidder. In response to the bidder rejecting the allocation modifier, the foregoing steps can be repeated with a different allocation modifier or no allocation modifier and a second allocation can be output wherein the quantity of each item is allocated to a second set of bidders.

Lastly, the invention is a method of determining at least one winning bidder in an exchange comprising: (a) receiving a plurality of bids, with each bid for a quantity of at least one item; (b) defining for each bid an expression that includes a bid variable; (c) receiving at least one allocation modifier; (d) defining for each allocation modifier an expression that includes an allocation modifier variable; (e) defining at least one limitation on the at least one allocation modifier; (f) forming a function that includes each bid expression and each allocation modifier expression; (g) establishing an objective for the function; (h) determining values for each bid variable and for each allocation modifier variable as a function of the objective and the at least one limitation, wherein the thus determined value of each allocation modifier variable is indicative of whether the limitation on the allocation modifier is satisfied; and (i) responsive to the value of each allocation modifier indicating the limitation thereon is satisfied, outputting data from which a bidder of a bid associated with said allocation modifier can be identified.

The at least one allocation modifier can include a modification to be imposed on at least one bid when a limitation associated with said one bid is satisfied. The objective in step (g) can be one of to maximize or minimize the function of step (f).

BRIEF DESCRIPTION OF THE DRAWINGS

Fig. 1 is a chart illustrating an exchange specification including bidders, items, and the quantity of each item along with bids received from each bidder for the items;

Fig. 2 is a chart illustrating a winning allocation determined by a winner determination process for the bids of Fig. 1, with no applied constraints, or allocation modifiers, that impose a condition on the processing of the received bids;

Fig. 3 is a chart illustrating a winning allocation determined by the winner determination process for the bids of Fig. 1, with a single winner constraint, or allocation modifier, applied;

Fig. 4 is a graph of the percent-volume discounts offered as bid modifiers for the bids of Bidders 1, 2 and 3 in Fig. 1;

Fig. 5 is a graph of the winning allocation determined by the winner determination process for the bids of Fig. 1, with the single winner constraint, or allocation modifier, applied and with offered percent-volume discounts of Fig. 4 applied as bid modifiers;

Fig. 6 is a chart illustrating the winning allocation determined by the winner determination process for the bids of Fig. 1, with the offered percent-volume discounts applied as bid modifiers and with the single winner and increased percent-volume discounts applied as constraints, or allocation modifiers;

Fig. 7 is a chart illustrating the winning allocation determined by the winner determination process for the bids of Fig. 1, with the offered percent-volume discounts applied as bid modifiers and with the increased percent-volume discounts and an $8,500 allocation reduction applied as constraints, or allocation modifiers, but with no maximum winner constraint;

Fig. 8 is a chart illustrating the winning allocation determined by the winner determination process for the bids of Fig. 1, with the offered percent-volume discounts applied as bid modifies and with the increased percent-volume discounts and a $9,500 allocation reduction applied as constraints, or allocation modifiers, but with no maximum winner constraint;

Fig. 9 is a graph of the offered percent-volume discounts shown in Fig. 4 with a percent-volume discount reduction applied; and

Fig. 10 is a chart illustrating the winning allocation determined by the winner determination process, with the offered percent-volume discounts applied as bid modifiers and with the percent-volume discount reductions shown in Fig. 9 applied as constraints, or allocation modifiers, but with no maximum winner constraint.

DETAILED DESCRIPTION OF THE INVENTION

The present invention will be described with reference to the accompanying figures where four bidders of an exchange are vying to sell (reverse auction) quantities of four items. Namely, a quantity of 10,000 of item W; a quantity of 60,000 of item X; a quantity of 50,000 of item Y; and a quantity of 50,000 of item Z. However, the description of the present invention in connection with four Bidders vying to sell quantities of four items is not to be construed as limiting the invention since use of the present invention in connection with an exchange having more or less bidders vying to buy and/or sell more or less items is envisioned.

The present invention is embodied in computer readable program code which executes on a processor of one or more stand-alone or networked computers. Each computer includes a processor, computer storage, an input/ output system, a media drive, such as a disk drive, CD ROM drive, etc., and a computer-usable storage medium capable of storing the computer software that embodies the present invention. Under the control of the computer readable program code the processor is capable of configuring and operating the computer system in a manner to implement the present invention. Computer systems of the type described above are well known in the art and are not described herein for the purpose of simplicity.

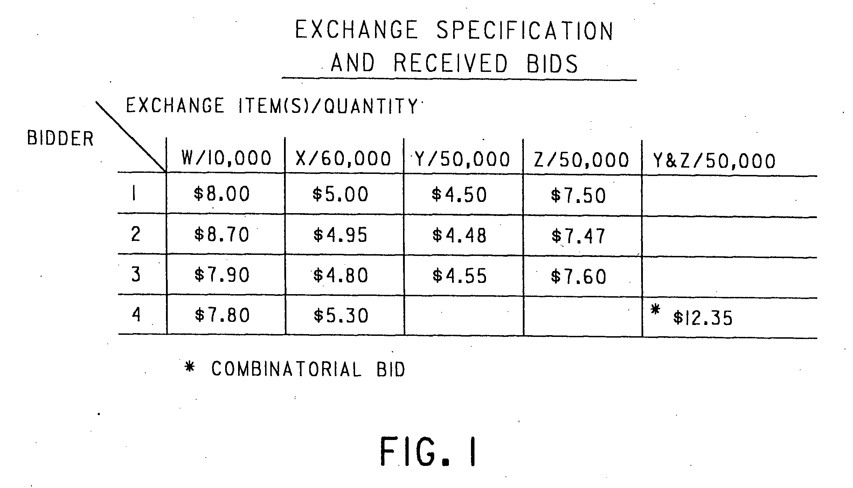

With reference to Fig. 1, under the control of the computer readable program code, the processor receives as input an exchange specification that includes the items for the exchange and the quantity of each item for the exchange. Under the control of the computer readable program code, the processor also receives as input one or more bids from each of a plurality of bidders. In the example shown in Fig. 1, each Bidder 1-4 inputs a single bid. Specifically, Bidder 1 inputs a bid of $8.00 for each unit of item W; $5.00 for each unit of item X; $4.50 for each unit of item Y; and $7.50 for each unit of item Z. Bidder 2 inputs $8.70 for each unit of item W; $4.95 for each unit of item X; $4.48 for each item of unit Y; and $7.47 for each unit of item Z. Bidder 3 inputs $7.90 for each unit of item W; $4.80 for each unit of item X; $4.55 for each unit of item Y; and $7.60 for each unit of item Z. Lastly, Bidder 4 inputs $7.80 for each unit of item W; $5.30 for each unit of item X; and $12.35 for each unit of the combination of items Y and Z. This last entry in the bid of Bidder 4 is a combinatorial bid where Bidder 4 only wishes to bid for each unit that includes one of item Y and one of item Z. A combinatorial bid is useful where two or more items exhibit complimentarity, i.e., where the value of the two or more items is worth more than the sum of the separate item values, or substitutability, i.e., where different items are interchangeable. Details regarding combinatorial bids and processing thereof can be found in United States Patent Application Serial No. 10/254,241, filed September 25, 2002, and United States Patent No. 6,272,473, issued August 7, 2001, which are incorporated herein by reference. United States Patent No. 6,272,473 also discloses a winner determination process that can be utilized in connection with the present invention. However, the present invention is not to be limited to utilizing the winner determination process disclosed in United States Patent No. 6,272,473 since the use of other winner determination processes applicable to auctions and/or exchanges is envisioned.

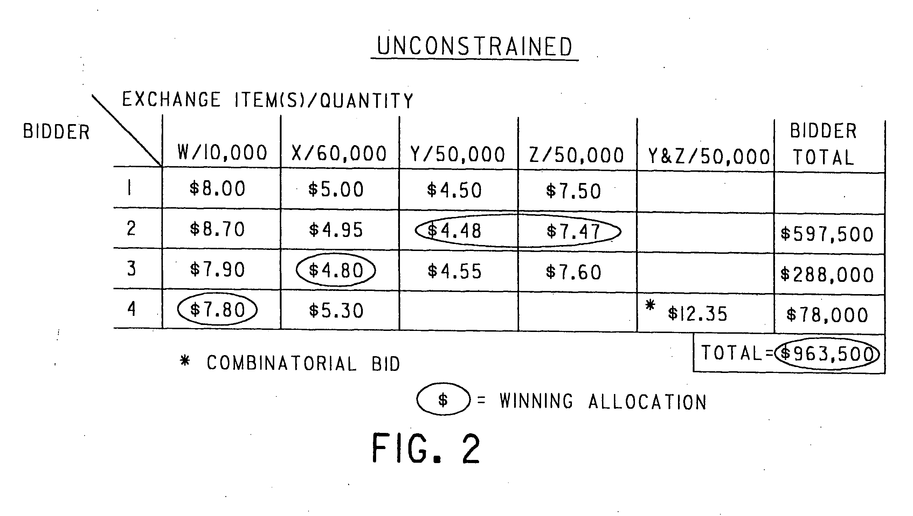

With reference to Fig. 2, and with continuing reference to Fig. 1, absent the application of a constraint, or an allocation modifier, to the bids shown in Fig. 1, the computer readable program code causes the processor to execute the winner determination process to determine a winning allocation based on the lowest price for each unit of items W, X, Y and Z. In the examples shown in Figs. 1 and 2, the winning allocation includes Bidder 2 being awarded 50,000 units of item Y at a price of $4.48 per unit and 50,000 units of item Z at a price of $7.47 per unit; Bidder 3 being awarded 60,000 units of item X at a price of $4.80 per unit; and Bidder 4 being awarded 10,000 units of item W at a price of $7.80 per unit. As shown in Fig. 2, the total for this allocation is $963,500.

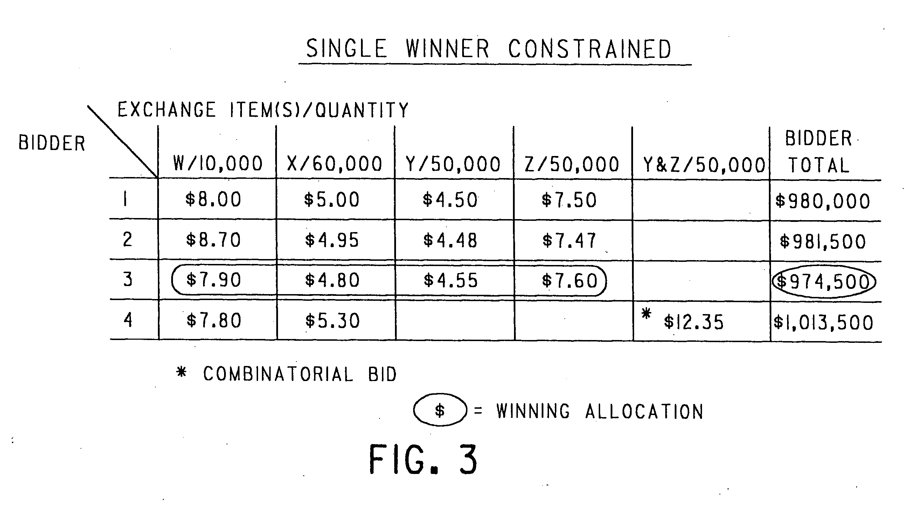

With reference to Fig. 3, and with continuing reference to Fig. 2, suppose that a bid taker presented with the allocation shown in Fig. 2 wishes to explore the effect on the winning allocation of imposing a maximum winner constraint, or allocation modifier, on the winner determination process to limit the winning allocation to a single bidder. In response to this constraint, or allocation modifier, the computer readable program code causes the processor to execute the winner determination process whereupon the bid associated with Bidder 3 is designated as the winning allocation. Comparing the winning allocations in Figs. 2 and 3, it can be seen that imposing a single winner constraint on the bids of Fig. 1 results in Bidders 2 and 4 being excluded from the winning allocation and with Bidder 3 having a greater participation in the winning allocation. Thus, in Fig. 3, Bidder 3 is a potential winning bidder.

The bid taker can designate as the winning allocation either the unconstrained winning allocation shown in Fig. 2 or the single winner constrained winning allocation shown in Fig. 3. This designation can be a function of the bid of at least one potential winning bidder. For example, if the bid taker's extra cost of administering the three winning bidders in the winning allocation shown in Fig. 2 is greater than $11,000, it is in the bid taker's economic interest to designate the constrained allocation shown in Fig. 3 as the winning allocation. However, if the cost of administering three bidders is less than $11,000, it is in the bid takers economic interest to designate the unconstrained allocation shown in Fig. 2 as the winning allocation.

It is not uncommon that a bidder in an exchange may be willing to modify one or more prices in order to be awarded a larger portion of the winning allocation or to become part of the winning allocation. Accordingly, a bid taker presented with the unconstrained winning allocation of Fig. 2 and the single winner constrained winning allocation of Fig. 3 can readily determine that negotiations with Bidder 3 to modify the total value of his bid, i.e., $974,500, to at least the total allocation value of the unconstrained winning allocation in Fig. 2, i.e., $963,500, will result in Bidder 3 being included in the winning allocation of Fig. 3 without considering the bid taker's cost of administering additional bidders (discussed in greater detail hereinafter). Thus, by simply applying a constraint, or allocation modifier, to a plurality of bids to determine a second allocation, where said constraint is not applied to the plurality of bids from which a first allocation is determined, and comparing the first and second allocations to determine any difference in the bid awards thereof, one or more bidders can be selectively identified for targeted negotiations regarding their bids.

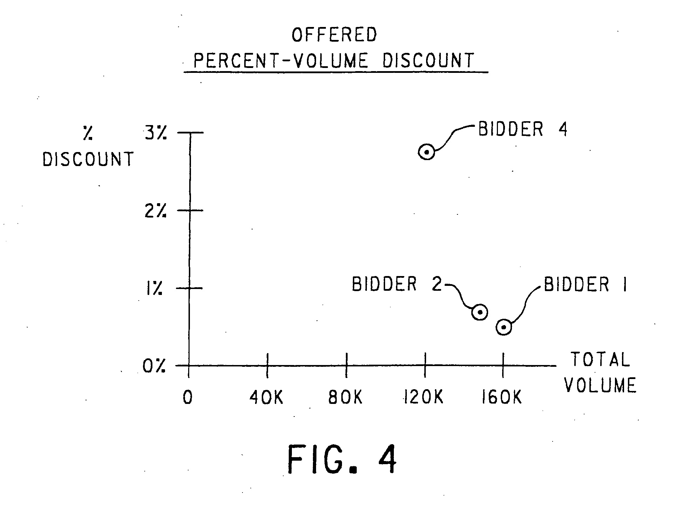

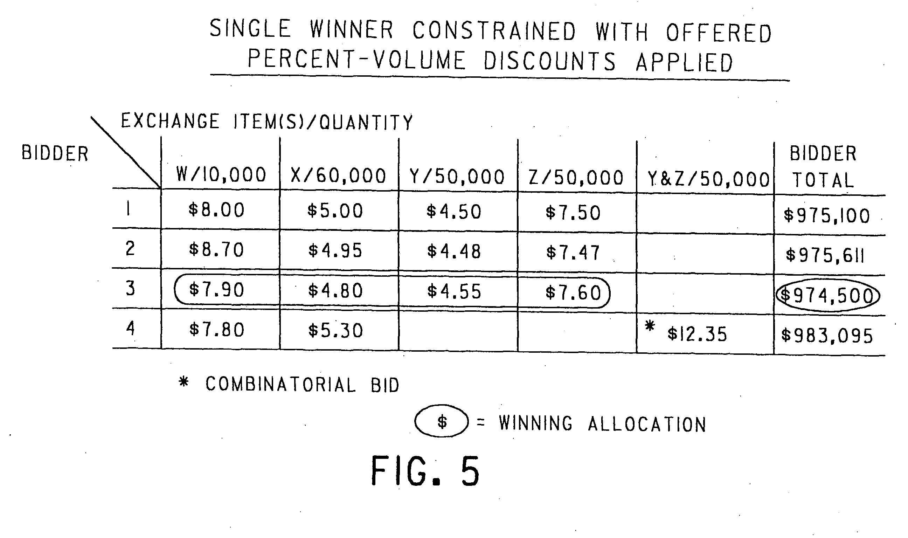

With reference to Figs. 4 and 5, starting from the single winning constrained winner allocation shown in Fig. 3, suppose that Bidder 1 offers a 0.5% volume discount when the total quantity of units of items awarded to Bidder 1 in a winning allocation equaled or exceeded 160,000; Bidder 2 offers a 0.6% discount when the total number of units of items awarded to Bidder 2 in the winning allocation equaled or exceeded 150,000; and Bidder 4 offers a 2.75% discount when the total quantity of units of items awarded to Bidder 4 in a winning allocation equaled or exceeded 120,000. Each of these percent-volume discounts represents a bid modifier that the winner determination process can utilize to determine the winning allocation. However, the description of percent-volume discounts as bid modifiers is not to be construed as limiting the invention since the use of other bid modifiers, such as, without limitation, percent-volume discount threshold, that modify the processing of their corresponding bid by the winner determination process is envisioned. The foregoing percent-volume discounts are shown graphically in Fig. 4.

The computer readable program code utilizes these offered percent-volume discounts and the single winner constraint to determine that the bid of Bidder 3 is still the winning allocation, even though Bidder 3 offered no percent-volume discount. Hence, in Fig. 5, Bidder 3 is a potential winning bidder.

Comparing the bidder totals shown in Figs. 3 and 5, it can be seen that applying the percent-volume discount reduced the bidder total for Bidder 1 to $975,100; reduced the bidder total for Bidder 2 to $975,611; and reduced the bidder total for Bidder 4 to $983,095. Notwithstanding these reductions, the bid of Bidder 3 was designated as the winning allocation in Fig. 5. However, this is not to be construed as limiting the invention since suitable increases in one or more of the percent-volume discounts or the volume discount thresholds offered by Bidders 1, 2 and/or 4 may result in any one or all of them having more favorable bids than Bidder 3 whereupon any one or all of Bidders 1, 2 and/ or 4 become potential winning bidders.

As can be seen from comparing the winning allocations shown in Figs. 3 and 5, no targeted negotiation opportunities exist solely from the application of the foregoing percent-volume discounts with the single winner constraint applied. Accordingly, when presented with the winning allocations shown in Figs. 3 and 5, the bid taker can designate the bid of Bidder 3 as the actual winning allocation. However, the bid taker can also explore the effect on the winning allocation of increasing the percent-volume discounts.

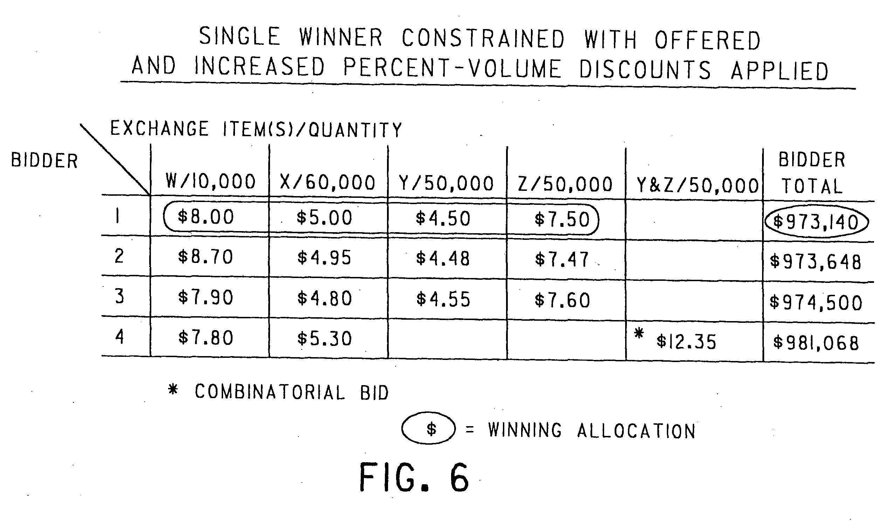

More specifically, with reference to Fig. 6, suppose that the bid taker increases by 0.2% the percent-volume discounts offered by Bidders 1, 2 and 4 to 0.7%, 0.8%, and 2.95%, respectively. This increase represents a new constraint, or allocation modifier, to the winner determination process. More specifically, this new constraint is added to the percent-volume discounts offered by Bidders 1, 2 and 4 that represent bid modifiers of the winner determination process. Utilizing these percent-volume discounts along with the single winner constraint, or allocation modifier, the computer readable program code causes the processor to execute the winner determination process whereupon the bid of Bidder 1 is designated as the winning allocation. Comparing the winning allocation of Figs. 5 and 6, it can be seen that increasing the percent-volume discounts offered by Bidders 1, 2 and 4 results in the exclusion of Bidder 3 from the winning allocation and the inclusion of Bidder 1 in the winning allocation. Thus, in Fig. 6, Bidder 1 is a potential winning bidder. As shown in Fig. 6, the bidder total for the bid of Bidder 1 is less than the bidder total for the bid of Bidder 3. Knowing that an additional 0.2% discount would result in the bid of Bidder 1 being designated the winning allocation, the bid taker can approach Bidder 1 for a targeted negotiation to reduce the percent-volume discount of Bidder 1 by an additional 0.2%.

Thus, by simply exploring the effect that different constraints, or allocation modifiers, have on the winner determination process, potential winning bidders can readily be identified for targeted negotiations. This ability to quickly identify potential winning bidders for targeted negotiations improves the overall efficiency of the process by avoiding negotiations with less desirable bidders, thereby enabling the overall efficiency and, hence, cost associated with determining the most favorable winning allocation to be improved.

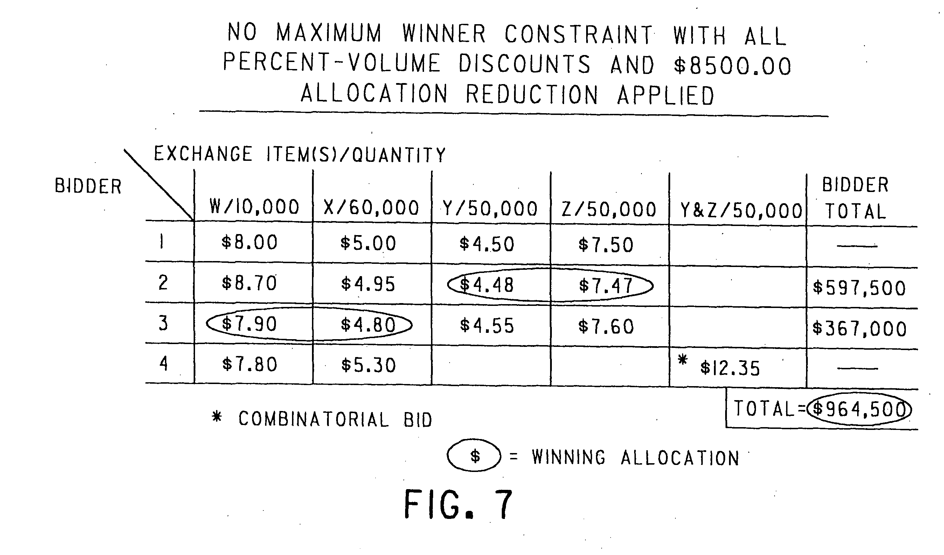

With reference to Fig. 7, other types of constraints, or allocation modifiers, can also be applied to bids in the winner determination process to determine if one or more other bidders are candidates for targeted negotiations. For example, suppose the bid taker presented with the allocation shown in Fig. 6 wishes to evaluate the effect on the winning allocation of removing the single winner constraint, maintaining the offered percent-volume discounts (bid modifiers) and increased percent-volume discounts (constraints), and reducing the total allocation value by at least $8,500. With these bid modifiers and constraints in place, the computer readable program code causes the processor to execute the winner determination process whereupon the winning allocation is designated to include the entries of the bid of Bidder 3 for items W and X, and the entries of the bid of Bidder 2 for items Y and Z, for a total allocation value of $964,500. Comparing the winning allocations shown in Figs. 6 and 7, it can be seen that the foregoing bid modifiers and constraints in place results in the exclusion of Bidder 1 from the winning allocation and the inclusion of Bidders 2 and 3 in the winning allocation. Thus, in Fig. 7, Bidders 2 and 3 are potential winning bidders.

Comparing the winning allocations of Figs. 6 and 7 initially suggests that the winning allocation shown in Fig. 7 is preferred since its total allocation value is more than $8,500 less than the total allocation value of the winning allocation shown in Fig. 6. However, there is typically an administration cost associated with managing additional bidders. Thus, this extra administration cost needs to be taken into account in order for the bid taker to realize the $8,500 reduction in the total allocation value shown in Fig. 6. Accordingly, this administration cost can be utilized as the basis of targeted negotiations with Bidder 2 and/or Bidder 3 to reduce their respective bidder total values. For example, Bidders 2 and 3 can be the subject of targeted negotiations by the bid taker to reduce the bidder total value of their bids as a function of the administration costs. More specifically, the aggregate administration cost for administering each additional bidder, in this example one (1) additional bidder, can be determined and the pro rata administration cost for each potential winning bidder can be determined by dividing the aggregate administration cost by the total number of winning bidders, in this example two (2) bidder, in the winning allocation. The bidder total of Bidders 1 and 2 can then be reduced by the pro rata administration costs. For example, suppose the cost of administering each new bidder is $5,000. Since there are only two bidders in the winning allocation of Fig. 7, this administration cost is divided by two to determine a pro rata administration cost, in this case $2,500. For the purpose of targeted negotiations, Bidders 2 and 3 can be subject to targeted negotiations by the bid taker to reduce their respective bidder total values by $2,500 in order for the bid taker to realize at least the desired reduction, i.e., $8,500, in the winning allocation value.

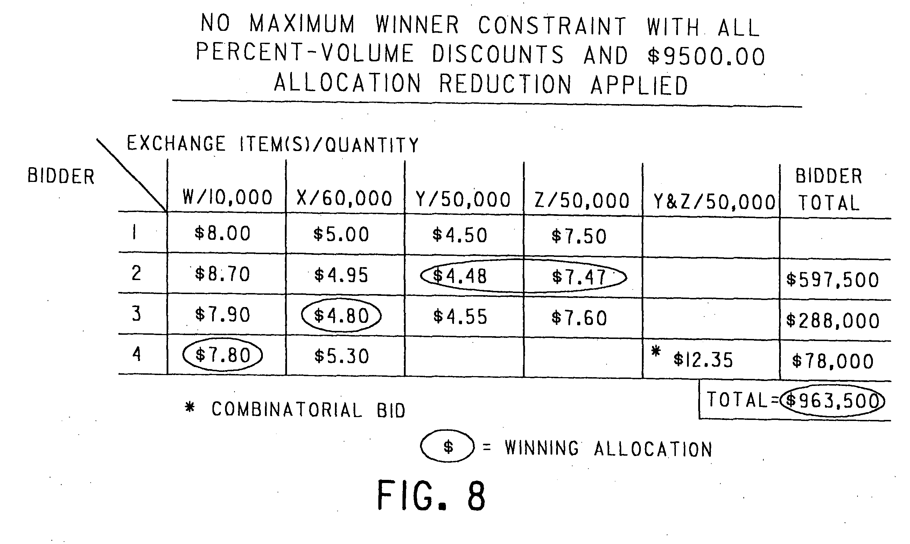

With reference to Fig. 8, and with continuing reference to Fig. 6, suppose that instead of exploring the effect of reducing the total allocation value by $8,500, the bid taker decides to explore the effect on the winning allocation of reducing the total allocation value by $9,500 while, at the same time, removing the single winning constraint and applying all offered (bid modifiers) and increased (constraints) percent-volume discounts discussed above in connection with Fig. 6. With these bid modifiers and constraints, or allocation modifiers, in place, the computer readable program code causes the processor to perform the winner determination process whereupon the winning allocation is designated to include the entries of the bid of Bidder 2 for items Y and Z, the entry of the bid of Bidder 3 for item X, and the entry of the bid of Bidder 4 for item W. As can be seen from a comparison of the winning allocations shown in Figs. 6 and 8, reducing the total allocation value by at least $9,500 results in the exclusion of Bidder 1 from the winning allocation and the inclusion of Bidders 2, 3 and 4 in the winning allocation. Thus, in Fig. 8, Bidders 2, 3 and 4 are potential winning bidders.

The winning allocation shown in Fig. 8 is the same as the unconstrained winning allocation shown in Fig. 2. However, as discussed above in connection with the example in Fig. 7, the administration cost associated with administering the two extra bidders of the winning allocation in Fig. 8, versus the one winning bidder in the winning allocation of Fig. 6, can be utilized as a basis for targeted negotiations with Bidders 2, 3 and 4 to further reduce each of their bidder total values so that the bid taker realizes at least the $9,500 reduction in the total allocation value.

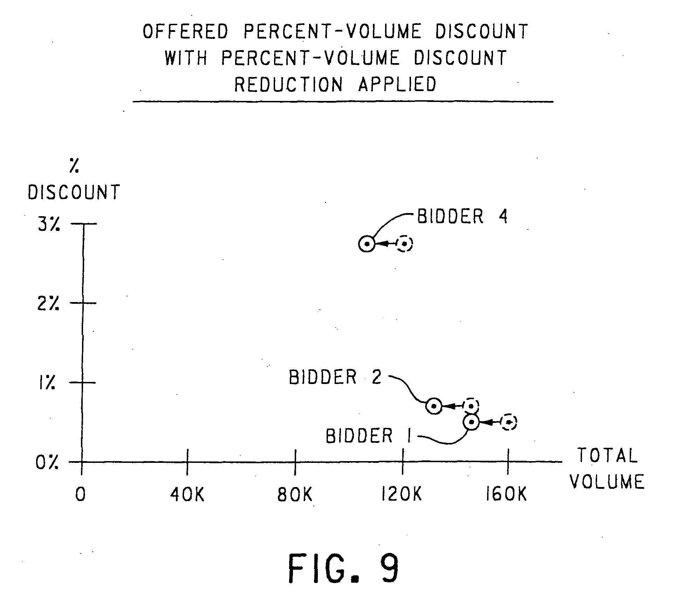

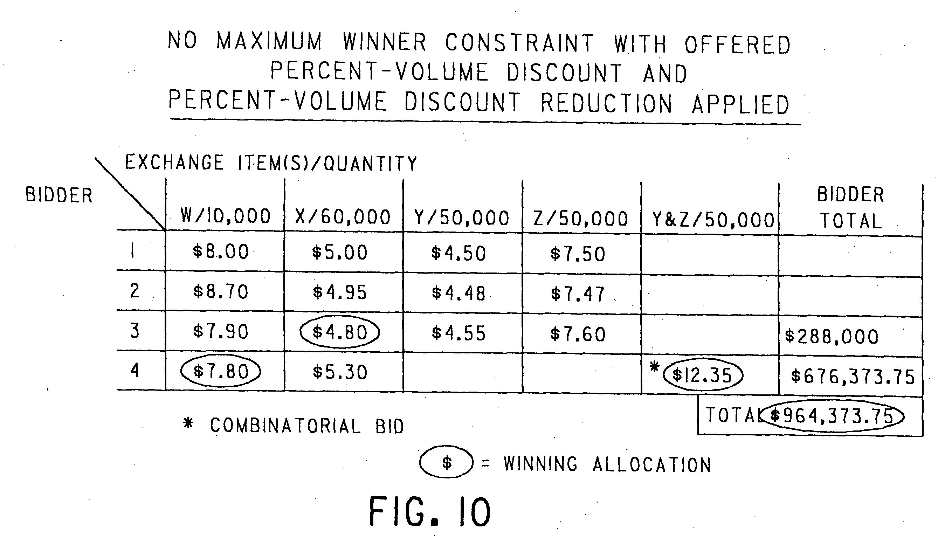

With reference to Figs. 9 and 10, and with reference back to Fig. 7, suppose the bid taker presented with the winning allocation shown in Fig. 7 wishes to explore which bidder(s) to approach to reduce their offered percent-volume discount threshold (bid modifier) by 10,000. This reduction in the percent-volume discount thresholds of Bidders 1, 2 and 4, shown graphically in Fig. 9, is yet another constraint, or allocation modifier, that can be applied to the bids. With the single winner constraint removed, and with the offered and increased percent-volume discounts, an $8,500 total allocation value reduction and the percent-volume discount threshold reduction applied, the computer readable program code causes the processor to execute the winner determination process whereupon the winning allocation is designated to include the entry of the bid of Bidder 3 for item X and the entries of the bid of Bidder 4 for items W, Y and Z. Comparing the winning allocations shown in Figs. 7 and 10, it can be seen that reducing the offered percent-volume discount thresholds by 10,000 results in the exclusion of Bidder 2 from the winning allocation, no change in Bidder 3's participation in the winning allocation, and an increase in Bidder 4's participation in the winning allocation. Thus, in Fig. 10, Bidders 3 and 4 are potential winning bidders since each of them must be approached for targeted negotiations to reduce their respective percent-volume discount threshold.

In each of the foregoing examples, a first allocation and a second allocation are compared to determine which bidders represent optimal targets for targeted negotiations regarding their bids. These targeted negotiations can include notifying at least one potential winning bidder that acceptance of the allocation modifier that resulted in them being designated a potential winning bidder will cause them to be included in the second allocation. In each of the foregoing examples, the designation of the first allocation or the second allocation as the winning allocation can occur as a function of at least one potential winning bidder or a difference in the number of winning bidders between the bidders of the first and second allocations. An example of the former includes receiving each potential winning bidder's acceptance or rejection of the allocation modifier. If a sufficient number of potential winning bidders, e.g., one or more potential winning bidder, do not accept the allocation modifier, the first allocation can be designated the winning allocation for the exchange. In contrast, if a sufficient number of potential winning bidders or each potential winning bidder accept the allocation modifier, the second allocation can be designated as the winning allocation for the exchange. This example, however, is not to be construed as limiting the invention since the designation of the first allocation or the second allocation as the winning allocation of an exchange can be based on any factor or combination of factors, including the objective or subjective impressions of the bid taker as to which of the first and second allocations represents the best value. To this end, the number of winning bidders in one of the first and second allocations and/or the inclusion of one or more specific bidders in the class of potential winning bidders may be deemed to be important by the bid taker in designating the first or second allocation as the winning allocation.

In practice, the winner determination process is desirably an optimization technique, such as, without limitation, mixed integer programming, where the objective is to maximize (forward auction) or minimize (reverse auction) an objective function f(Objective). When executing the winner determination process, the computer readable program code forms the objective function f(Objective), such as a linear function, that includes at least one constant C and one variable V for each bid. Each variable V can include an initial value. However, it is not necessary for the initial value of each variable V to be initialized to a particular value. An exemplary objective function for the bids of Bidders 1 to 4 shown in Fig. 1 can be generally expressed in the form shown in the following equation (EQ1):

$$EQ1: \quad f(Objective) = C_1V_1 + C_2V_2 + C_3V_3 + C_4V_4.$$

In addition, the computer readable program code forms one or more mathematical expressions that express relationships, or limitations, between the bids and, hence, the variables V associated with the bids. Each limitation can be in the form of an equality or an inequality. Each of these mathematical expressions can be generally expressed in the form shown in the following equation (EQ2):

EQ2: $f(V_x, V_y)$ = relationship between each bid of Bidder x and a bid

of Bidder y related to the bid of Bidder x.

where

V = variable used in EQ1;
x = one Bidder #; and
y = another Bidder #.

As would be appreciated by those of ordinary skill in the art, mathematical expression of the type shown in EQ2 can also express relationships between more than two variables V to be used in EQ1. Accordingly, the general form mathematical expression shown in EQ2 is not to be construed as limiting the invention.

During execution of the winner determination process, the computer readable program code causes the processor to minimize (for a reverse auction) or maximize (for a forward auction) the objective function of EQ1 subject to limitations of the type shown in EQ2 to determine a new value for each variable V of objective function f(Objective). The constant C associated with each variable V of objective function f(Objective) represents a property of the exchange, such as a property of a bid, e.g., a quantity of an item.

The foregoing general description of the manner in which the computer readable program code causes the processor to execute the winner determination process is well known in the art and has been included herein as background for the following discussion.

In accordance with the present invention, each received constraint, or allocation modifier, is included by the computer readable program code as one or more terms, e.g., KV, in the objective function f(Objective). For example, in the allocation shown in Fig. 6, the bid taker inputs allocation modifiers that increase the percent-volume discounts offered by bidders 1, 2, and 4. These allocation modifiers can be expressed in the objective function as $-K_a V_a$, $-K_b V_b$ and $-K_c V_c$. $K_a$, $K_b$ and $K_c$ are mathematical expressions that define relationships between bidders 1, 2, and/or 4. Each such mathematical expression includes constants, variables and/or data (not shown) related to how the allocation modifier causes the winner determination process to modify the allocation and from which each bidder can be identified. $V_a$, $V_b$, and $V_c$ are variables related to expressions $K_a$, $K_b$ and $K_c$, respectively, that the computer readable program code assigns a value, e.g., 0 or 1, to indicate whether the corresponding expression K is included in the allocation determined by the winner determination process. An exemplary inclusion of allocation modifiers in EQ1 is shown in the following equation EQ3:

$$EQ3: \quad f(Objective) = C_1 V_1 + C_2 V_2 + C_3 V_3 + C_4 V_4 - K_a V_a - K_b V_b - K_c V_c.$$

The minus (-) sign preceding each allocation modifier in EQ3 related to the increased percent-volume discount indicates that the desired effect of the expressions is to further minimize the solution of f(Objective). Where further maximization is desirable, a plus (+) sign would precede each allocation modifier related to the increased percent-volume discount.

In its simplest form, an allocation modifier can be an expression of the type KV shown in EQ3. However, an allocation modifier can also be subject to one or more limitations (not shown), each of which expresses a relationship between two or more bids and/or bidders. Accordingly, an allocation modifier is any expression(s) and corresponding limitation(s) that the winner determination process can processes to output an allocation that can be different than the allocation that would be output by the winner determination process absent said expression(s). For example, the allocations shown in Figs. 2 and 3 are different because of the application of the single winner constraint in the allocation shown in Fig. 3 versus the unconstrained allocation shown in Fig. 2. In this example, the addition of the single winner allocation modifier to the objective function f(Objective) utilized by the winner determination process to determine the allocation shown in Fig. 2 causes the winner determination process to determine the allocation shown in Fig. 3.

However, it should be appreciated that the addition of an allocation modifier to an objective function f(Objective) may not necessarily cause a change in an allocation. For example, the allocations shown in Figs. 2 and 8 are the same even though the allocation shown in Fig. 8 has an additional $9500 reduction in the allocation value, i.e., allocation modifier, applied. Similarly, the allocations shown in Figs. 3 and 5 are the same even though the allocation shown in Fig. 5 includes offered percent-volume discounts, i.e., allocation modifier, applied. For simplicity of description, hereinafter, allocation modifiers will be described as being of the type KV shown in EQ3. However, this is not to be construed as limiting the invention.

In operation, the computer readable program code causes the processor to execute the winner determination process, i.e., the optimization process, to minimize (reverse auction) or maximize (forward auction) the objective function f(Objective). As a result of executing the winner determination process, one or more new values are determined for the variables forming each expression K. In addition, a value is determined for each variable V of the objective function f(Objective). When the bids are binary, the winner determination process determines a value of 0 or 1 for each variable V

For example, the allocations shown in Figs. 3 and 5 are the same regardless of the application of the offered percent-volume discounts, i.e., allocation modifier, in the allocation of Fig. 5. Hence, the values assigned to the variables V of the objective function f(Objective) associated with the allocation shown in Fig. 3 are the same as the values of the variables V of the objective function f(Objective) associated with the allocation shown in Fig. 5. In contrast, the allocations in Fig. 2 and Fig. 3 are different because of the application of the single winner constraint, i.e., allocation modifier, in the allocation shown in Fig. 3 versus the unconstrained allocation shown in Fig. 2. Hence, the value assigned to one or more variables V of the objective functions f(Objective) associated with the allocations show in Figs. 2 and 3 are different.

The description herein of the value of each variable V as being either 0 or 1 is not to be construed as limiting the invention. Similarly, the description of the winner determination process as being solved by a mixed integer programming technique is not to be construed as limiting the invention since other optimization techniques known in the art can also be utilized.

Since, in the present example, each expression $K_a$, $K_b$ and $K_c$ includes one or more variables and/or data from which one or more bidders can be identified, if the value determined for the corresponding variable V is, for example, 1, the computer readable program code can extract the identity of the one or more bidders (potential winning bidder(s)) directly from the corresponding expression K and can output this information, e.g., to a video display, for use by the bid taker for targeted negotiation(s). Additionally or alternatively, when the winner determination process assigns a value of 1 to a variable V of an allocation modifier, the computer readable program code can directly output the allocation modifier for use by the bid taker to determine from the values assigned to the variables of the expression K by the winner determination process and/or from the data of the expression K the identity of one or more bidders (potential winning bidder(s)) for targeted negotiation(s).

In the foregoing examples, a value of 1 or 0 is assigned to each variable V. However, as would be apparent to those of ordinary skill in the art, the values for each variable V may be different for non-binary bids, and, therefore, the values of 1 and 0 are not to be construed as limiting the invention. To this end, the value determined for each variable V may be determined and compared to a threshold value or a range of values to determine if its value is indicative of the corresponding allocation modifier being included in the winning allocation determined by the winner determination process.

Once the identification of each bidder and/or the allocation modifier is output by the computer readable program code, each potential winning bidder can be solicited, either in-person or automatically, e.g., via a computer network, to accept the allocation modifier. In response to receiving each potential winning bidder's acceptance of the allocation modifier, the allocation that includes an award to each bidder that was identified as a potential winning bidder can be designated as the winning allocation. In contrast, in response to an insufficient number of potential winning bidder's accepting the allocation modifier, i.e., at least one potential winning bidder rejecting the allocation modifier, the bid taker can invoke execution of the computer readable program code to repeat the winner determination process as necessary, with each iteration of the winner determination process running with a different allocation modifier or no allocation modifier, until an allocation with no applied allocation modifier is determined or until a desirable number of potential winning bidders accept the allocation modifier whereupon said allocation is designated as the winning allocation.

In the foregoing description, the offered percent-volume discount and the offered percent-volume discount threshold are classified as bid modifiers while increases to the percent-volume discount, increases in the percent-volume discount threshold, changes in the maximum or minimum number of winning bidders, and a change in an allocation value between the first and second allocations are designated as constraints, or allocation modifiers. However, this is not to be construed as limiting the invention since the use of other bid modifiers and/or other constraints, or allocation modifiers, are envisioned. Examples of other constraints, or allocation modifiers, include changes in one or more of a volume discount, a volume discount threshold, a number of bidders receiving an award in an allocation, an allocation value, a delivery date, a credit term, an item property or a non-price attribute, such as credit history, delivery history, or bidder reputation.

As can be seen from the foregoing, by modifying one or more bid modifiers and/or constraints, or allocation modifiers, that impose a condition on the manner the winner determination process processes the bids, bidders in an exchange can be identified for targeted negotiations that improve the desired outcome of the exchange for the bid taker while, at the same time, providing bidders with the opportunity to increase their participation in a winning allocation. To this end, the present invention targets optimal negotiation opportunities and, more specifically, provides a structured approach for negotiating agents, either human or automated, to identify the best negotiation prospects given limited negotiation resources.

The present invention has been described with reference to the preferred embodiments. Obvious combinations and alterations will occur to others upon reading and understanding the preceding detailed description. For example, while described in connection with four bidders bidding on four items, the present invention is applicable to exchanges having any number of bidders bidding on any number of items. Moreover, while the present invention has been described with reference to the application and/or relaxation of a limited number of allocation modifiers and/or constraints on bids in the winner determination process, it will be appreciated by one of ordinary skill in the art that the present invention, in use, may require a number of iterations of the winner determination process with the application, increase and/or relaxation of different allocation modifiers and/or constraints before one or more bidders for targeted negotiation are identified. It is intended that the invention be construed as including all such modifications and alterations insofar as they come within the scope of the appended claims or the equivalents thereof.

**Claims**

1. A method of determining a winning allocation in an exchange comprising: ,

    (a) receiving a plurality of bids, with each bid placed on a quantity of at least one item;
    (b) receiving at least one allocation modifier;
    (c) defining an objective as a function of each bid and the allocation modifier;
    (d) defining at least one limitation on how the allocation modifier can be changed;
    (e) determining from the objective subject to the at least one limitation how the allocation modifier changes; and
    (f) responsive to how the allocation modifier changes, outputting data from which a bidder of a bid associated with the allocation modifier can be identified.

2. The method of claim 1, wherein, in step (f), said data includes at least one of (1) the identified bidder's identity and (2) the allocation modifier.

3. The method of claim 1, wherein the change in the allocation modifier includes a change in a value of a variable thereof.

4. The method of claim 1, wherein:

    the allocation modifier expresses a modification to be imposed on the bid when a limitation associated with the bid is satisfied;
    the change of the allocation modifier is indicative of whether the condition associated with the bid is satisfied; and
    the data is output when the one or more values of the allocation modifier indicate the condition is satisfied.

5. The method of claim 1, further including:

    (g) responsive to how the allocation modifier changes, soliciting the identified bidder to accept the allocation modifier.

6. The method of claim 5, further including:

    receiving the identified bidder's acceptance or rejection of the allocation modifier;
    responsive to the identified bidder accepting the allocation modifier, outputting a first allocation wherein the quantity of each item is allocated to a first set of bidders that includes the identified bidder; and
    responsive to the identified bidder rejecting the allocation modifier, repeating steps (e)-(g), inclusive, with one of (1) a different allocation modifier or (2) no allocation modifier and outputting a second allocation wherein the quantity of each item is allocated to a second set of bidders.

7. The method of claim 6, wherein the first and second set of bidders are the same.

8. The method of claim 6, wherein the second set of bidders includes the identified bidder.

9. The method of claim 6, further including displaying at least one of:

    the bidder;

the first allocation; and
the second allocation.

10. The method of claim 1, wherein the objective includes a variable and a coefficient for each bid and a variable and a coefficient for each allocation modifier.

11. The method of claim 1, wherein the limitation is one of an equality and an inequality.

12. The method of claim 1, wherein the change in the allocation modifier corresponds to a change in at least one of:

a volume discount;
a volume discount threshold;
a number of bidders to receive an award in an allocation;
an allocation value;
a delivery date;
a credit term;
an item property; and
a non-price bid property.

13. The method of claim 12, wherein the non-price bid property includes at least one of:

credit history;
delivery history; and
bidder reputation.

14. A computer readable medium having stored thereon instructions which, when executed by a processor, cause the processor to perform the steps of:

(a) receive a plurality of bids, with each bid placed on a quantity of at least one item;
(b) receive at least one allocation modifier;
(c) form an objective as a function of each bid and the allocation modifier;
(d) receive at least one limitation on how the allocation modifier can be changed;
(e) determine from the objective subject to the at least one limitation how the allocation modifier changes; and
(f) in response to how the allocation modifier changes, output data from which a bidder of a bid associated with the allocation modifier can be identified.

15. The computer readable medium of claim 14, wherein at least one of:

the allocation modifier expresses a modification to be imposed on the bid when a condition associated with the bid is satisfied;
the change of the allocation modifier is indicative of whether the condition associated with the bid is satisfied; and
the data is output when the change of the allocation modifier indicates the condition is satisfied.

16. The computer readable medium of claim 15, wherein the instructions further cause the processor to:

determine when the change of the allocation modifier indicates the condition is satisfied; and
in response to determining the condition is satisfied, output an allocation wherein the quantity of each item is allocated to a set of bids that includes the bid of the identified bidder.

17. The computer readable medium of claim 14, wherein the instructions further cause the processor to notify the identified bidder that acceptance by said bidder of the allocation modifier will cause said bidder to be included in a winning allocation.

18. The computer readable medium of claim 14, wherein the instructions further cause the processor to:

receive said bidder's acceptance or rejection of the allocation modifier;
in response to the said bidder accepting the allocation modifier, output a first allocation wherein the quantity of each item is allocated to a first set of bidders that includes said bidder; and

in response to said bidder rejecting the allocation modifier, repeat steps (e) and (f) with one of (1) a different allocation modifier or (2) no allocation modifier and output a second allocation wherein the quantity of each item is allocated to a second set of bidders.

**19.** The computer readable medium of claim 18, wherein the first and second set of bidders are the same.

**20.** The computer readable medium of claim 18, wherein the second set of bidders includes the identified bidder.

**21.** The computer readable medium of claim 18, further including displaying at least one of:

the identified bidder;
the first allocation; and
the second allocation.

**22.** The computer readable medium of claim 14, wherein the objective includes a variable and a coefficient for each bid and a variable and a coefficient for each allocation modifier.

**23.** The computer readable medium of claim 14, wherein the limitation is one of an equality and an inequality.

**24.** The computer readable medium of claim 15, wherein the allocation modifier includes a change in at least one of:

a volume discount;
a volume discount threshold;
a number of bidders to receive an award in an allocation;
an allocation value;
a delivery date;
a credit term;
an item property; and
a non-price bid property.

**25.** A method of determining at least one winning bidder in an exchange comprising:

(a) receiving a plurality of bids, with each bid for a quantity of at least one item;
(b) defining for each bid an expression that includes a bid variable;
(c) receiving at least one allocation modifier;
(d) defining for each allocation modifier an expression that includes an allocation modifier variable;
(e) defining at least one limitation on the at least one allocation modifier;
(f) forming a function that includes each bid expression and each allocation modifier expression;
(g) establishing an objective for the function;
(h) determining values for each bid variable and for each allocation modifier variable as a function of the objective and the at least one limitation, wherein the thus determined value of each allocation modifier variable is indicative of whether the limitation on the allocation modifier is satisfied; and
(i) responsive to the value of each allocation modifier indicating the limitation thereon is satisfied, outputting data from which a bidder of a bid associated with said allocation modifier can be identified.

**26.** The method of claim 25, wherein the at least one allocation modifier includes a modification to be imposed on at least one bid when a limitation associated with said one bid is satisfied.

**27.** The method of claim 25, wherein the objective is one of maximize and minimize the function.

# EXCHANGE SPECIFICATION
## AND RECEIVED BIDS

EXCHANGE ITEM(S)/QUANTITY

BIDDER

| | W/10,000 | X/60,000 | Y/50,000 | Z/50,000 | Y&Z/50,000 |
|---|---|---|---|---|---|
| 1 | $8.00 | $5.00 | $4.50 | $7.50 | |
| 2 | $8.70 | $4.95 | $4.48 | $7.47 | |
| 3 | $7.90 | $4.80 | $4.55 | $7.60 | |
| 4 | $7.80 | $5.30 | | | * $12.35 |

\* COMBINATORIAL BID

## FIG. 1

EP 1 462 977 A1

## UNCONSTRAINED

EXCHANGE ITEM(S)/QUANTITY

BIDDER

| | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | |
| 2 | $8.70 | $4.95 | $4.48 | $7.47 | | $597,500 |
| 3 | $7.90 | $4.80 | $4.55 | $7.60 | | $288,000 |
| 4 | $7.80 | $5.30 | | | * $12.35 | $78,000 |

* COMBINATORIAL BID

TOTAL = $963,500

$ = WINNING ALLOCATION

# FIG. 2

EP 1 462 977 A1

## SINGLE WINNER CONSTRAINED

EXCHANGE ITEM(S)/QUANTITY

| BIDDER | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | $980,000 |
| 2 | $8.70 | $4.95 | $4.48 | $7.47 | | $981,500 |
| 3 | $7.90 | $4.80 | $4.55 | $7.60 | | $974,500 |
| 4 | $7.80 | $5.30 | | | * $12.35 | $1,013,500 |

\* COMBINATORIAL BID

( $ ) = WINNING ALLOCATION

# FIG. 3

OFFERED
PERCENT-VOLUME DISCOUNT

% DISCOUNT

3% ── BIDDER 4

2%

1% ── BIDDER 2 ─ BIDDER 1

0% ── TOTAL VOLUME

0    40K    80K    120K    160K

FIG. 4

## SINGLE WINNER CONSTRAINED WITH OFFERED
## PERCENT-VOLUME DISCOUNTS APPLIED

EXCHANGE ITEM(S)/QUANTITY

| BIDDER | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | $975,100 |
| 2 | $8.70 | $4.95 | $4.48 | $7.47 | | $975,611 |
| 3 | $7.90 | $4.80 | $4.55 | $7.60 | | $974,500 |
| 4 | $7.80 | $5.30 | | | * $12.35 | $983,095 |

\* COMBINATORIAL BID

( $ ) = WINNING ALLOCATION

# FIG. 5

EP 1 462 977 A1

## SINGLE WINNER CONSTRAINED WITH OFFERED
## AND INCREASED PERCENT-VOLUME DISCOUNTS APPLIED

EXCHANGE ITEM(S)/QUANTITY

BIDDER

| | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | $973,140 |
| 2 | $8.70 | $4.95 | $4.48 | $7.47 | | $973,648 |
| 3 | $7.90 | $4.80 | $4.55 | $7.60 | | $974,500 |
| 4 | $7.80 | $5.30 | | | * $12.35 | $981,068 |

\* COMBINATORIAL BID

($) = WINNING ALLOCATION

# FIG. 6

EP 1 462 977 A1

## NO MAXIMUM WINNER CONSTRAINT WITH ALL PERCENT-VOLUME DISCOUNTS AND $8500.00 ALLOCATION REDUCTION APPLIED

EXCHANGE ITEM(S)/QUANTITY

| BIDDER | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | —— |
| 2 | $8.70 | $4.95 | $4.48 | $7.47 | | $597,500 |
| 3 | $7.90 | $4.80 | $4.55 | $7.60 | | $367,000 |
| 4 | $7.80 | $5.30 | | | * $12.35 | —— |

\* COMBINATORIAL BID

TOTAL = $964,500

( $ ) = WINNING ALLOCATION

# FIG. 7

EP 1 462 977 A1

## NO MAXIMUM WINNER CONSTRAINT WITH ALL PERCENT-VOLUME DISCOUNTS AND $9500.00 ALLOCATION REDUCTION APPLIED

EXCHANGE ITEM(S)/QUANTITY

| BIDDER | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | |
| 2 | $8.70 | $4.95 | ($4.48 | $7.47) | | $597,500 |
| 3 | $7.90 | ($4.80) | $4.55 | $7.60 | | $288,000 |
| 4 | ($7.80) | $5.30 | | | * $12.35 | $78,000 |

\* COMBINATORIAL BID

TOTAL = ($963,500)

($) = WINNING ALLOCATION

# FIG. 8

EP 1 462 977 A1

OFFERED PERCENT-VOLUME DISCOUNT
WITH PERCENT-VOLUME DISCOUNT
REDUCTION APPLIED

FIG. 9

EP 1 462 977 A1

## NO MAXIMUM WINNER CONSTRAINT WITH OFFERED PERCENT-VOLUME DISCOUNT AND PERCENT-VOLUME DISCOUNT REDUCTION APPLIED

EXCHANGE ITEM(S)/QUANTITY

| BIDDER | W/10,000 | X/60,000 | Y/50,000 | Z/50,000 | Y&Z/50,000 | BIDDER TOTAL |
|---|---|---|---|---|---|---|
| 1 | $8.00 | $5.00 | $4.50 | $7.50 | | |
| 2 | $8.70 | $4.95 | $4.48 | $7.47 | | |
| 3 | $7.90 | ($4.80) | $4.55 | $7.60 | | $288,000 |
| 4 | ($7.80) | $5.30 | | | * ($12.35) | $676,373.75 |

TOTAL ($964,373.75)

\* COMBINATORIAL BID

($) = WINNING ALLOCATION

## FIG. 10

# EP 1 462 977 A1

**European Patent Office**

## DECLARATION

**Application Number**

which under Rule 45 of the European Patent Convention EP 04 07 5940
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter
excluded from patentability under Art.
52(2) and (3) EPC. Given that the claims
are formulated in terms of such subject
matter or merely specify commonplace
features relating to its technological
implementation, the search examiner could
not establish any technical problem which
might potentially have required an
inventive step to overcome. Hence it was
not possible to carry out a meaningful
search into the state of the art (Rule 45
EPC). See also Guidelines Part B Chapter
VIII, 1-3.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

-----

| Place of search | Date | Examiner |
|---|---|---|
| The Hague | 2 June 2004 | Peelen, B |

EPO FORM 1504 (P04C37)